# EUROPÄISCHE PATENTANMELDUNG

(11) **EP 4 134 297 A1**
(43) Veröffentlichungstag der Anmeldung: **15.02.2023**
(21) Anmeldenummer: 22189528.7
(22) Anmeldetag: 09.08.2022
(51) Int. Cl.: B62J 9/27, B62K 7/02, B62K 7/04

(54) **KRAGENELEMENT**

(30) Priorität: 11.08.2021 DE 202021104290 U
(71) Anmelder: RTI Sports GmbH, 56070 Koblenz (DE)
(72) Erfinder: WILTS, Jelte, 53121 Bonn (DE); ZARZA AGUADO, Alejandro, 64646 Heppenheim (DE)
(74) Vertreter: dompatent von Kreisler Selting Werner - Partnerschaft von Patent- und Rechtsanwälten mbB

(57) **Zusammenfassung**

Ein Kragenelement (32) zur Anordnung an einem Lastenfahrradbehälter (28) weist ein Rückwandelement (36) sowie zwei mit dem Rückwandelement (36) verbundene, einander gegenüberliegende Seitenelemente (40) auf. Zum Fixieren des Kragenelements (32) an dem Lastenfahrradbehälter (28) sind mit dem Rückwandelement (36) und/oder den Seitenwänden (40) Halteelemente (44, 46) verbunden. Um die Gefahr von Verletzungen an den Halteelementen zu reduzieren, sind diese vorzugsweise in Vertiefungen (52) angeordnet.

## Beschreibung

Die Erfindung betrifft ein Kragenelement zur Anordnung an einem Lastenfahrradbehälter.

Lastenfahrradbehälter dienen zur Aufnahme von Gegenständen oder Personen, insbesondere Kindern. Hierzu ist es beispielsweise bekannt, innerhalb des Lastenfahrradbehälters ein oder mehrere Kindersitze anzuordnen. Gegebenenfalls können auch Sicherheitsgurte für die Kinder angebracht werden. Der obere Rand von Lastenfahrradbehältern endet üblicherweise unterhalb der Schulter eines in dem Lastenfahrradbehälter sitzenden Kindes. Je nach Alter und Größe des Kindes kann der obere Rand des Lastenfahrradbehälters relativ zur Schulter des Kindes selbstverständlich variieren. Üblicherweise ragt zumindest der Kopf über den oberen Rand des Lastenfahrradbehälters vor. Bei Unfällen oder auch nur wenn das Lastenfahrrad umkippt, können daher bisweilen schwere Kopfverletzungen auftreten. Bei bekannten Lastenfahrrädern kann dieses Risiko nur dadurch reduziert werden, dass die Kinder einen Fahrradhelm tragen. Aufgrund der gegebenenfalls hohen Geschwindigkeit eines, insbesondere mit einem Elektromotor unterstützten Lastenfahrrads können dennoch schwere Verletzungen, insbesondere Kopfverletzungen bei den transportierten Kindern auftreten.

Ferner ist es bekannt, im rückwärtigen Bereich des Lastenfahrradbehälters ein in Draufsicht U-förmiges Kragenelement bzw. eine Randerhöhung vorzusehen. Bei bekannten Lastenfahrradbehältern mit einem derartigen Kragenelement ist die Höhe des Kragenelements jedoch weiterhin derart ausgestaltet, dass der Kopf des transportierten Kindes über dieses vorsteht.

Aufgabe der Erfindung ist es, ein Kragenelement für einen Lastenfahrradbehälter zu schaffen, mit dem das Verletzungsrisiko weiter reduziert werden kann.

Die Lösung der Aufgabe erfolgt erfindungsgemäß durch ein Kragenelement mit den Merkmalen des Anspruchs 1.

Das erfindungsgemäße Kragenelement zur Anordnung an einem Lastenfahrradbehälter weist ein Rückwandelement und zwei mit dem Rückwandelement verbundene einander gegenüberliegende Seitenelemente auf. Hierbei kann es sich um gesonderte Bauteile oder ein einziges einstückiges Bauteil handeln. Gegebenenfalls kann auch das Rückwandelement zweiteilig ausgebildet und beispielsweise in der Mitte halbiert sein. Ein derartiges Teil-Rückwandelement kann sodann wieder einstückig mit dem Seitenelement ausgebildet sein. Vorzugsweise ist das Kragenelement insbesondere das gesamte Kragenelement aus Kunststoffmaterial hergestellt. Besonders geeignet ist die Verwendung von EPP (expandiertes Polypropylen). Selbstverständlich können auch Kombinationen unterschiedlicher Materialien, wie beispielsweise auch zur Versteifung einzelner Bereiche miteinander kombiniert werden.

Das erfindungsgemäße Kragenelement weist ferner Halteelemente zum Fixieren des Kragenelements an dem Lastenfahrradbehälter auf. Insbesondere erfolgt ein Fixieren an dem Lastenfahrradbehälter derart, dass durch das Kragenelement eine Seitenwanderhöhung des Lastenfahrradbehälters erfolgt. Insbesondere erfolgt diese Erhöhung derart, dass eine Rückwand des Lastenfahrradbehälters und Teile der Seiten erhöht werden. Ebenso kann eine Erhöhung der der Rückwand gegenüberliegenden Vorderwand und wiederum ein Teil der Seitenwände erfolgen. Dies hängt insbesondere davon ab, in welchem Bereich die zu transportierenden Personen sitzen. Besonders bevorzugt ist es hierbei, dass die Erhöhung durch das Kragenelement derart erfolgt, dass ein oberer Rand des Kragenelements deutlich über der Schulter eines transportierten Kindes angeordnet ist. Insbesondere sollte eine Oberkante des Kragenelements mindestens die Höhe des Kopfs und besonders bevorzugt höher als der Kopf des Kindes in sitzender Position sein. Vorzugsweise beträgt ein Abstand zwischen einer Sitzfläche und einer Oberkante des Kragenelements 50cm - 80cm, insbesondere 50cm - 70cm.

Die erfindungsgemäßen Halteelemente sind an dem Rückwandelement und/oder den Seitenelementen angeordnet und mit diesen verbunden. Besonders bevorzugt ist es hierbei, dass je Seitenwand zumindest ein Halteelement vorgesehen ist. An dem Rückwandelement kann ein Halteelement, insbesondere mittig zentral oder auch mehrere Halteelemente angeordnet sein. Um das Verletzungsrisiko zu minimieren, sind die Halteelemente in Vertiefungen angeordnet oder von dem Rückwandelement bzw. dem Seitenelement umgeben. Insbesondere können die Halteelemente vollständig innerhalb eines aus Kunststoff hergestellten Rückwandelements und/oder Seitenelements angeordnet sein. Hierbei stehen jeweils untere Enden der Halteelemente nach unten aus dem Kragenelement vor, um diese sodann mit dem Lastenfahrradbehälter zu verbinden. Beispielsweise können in den Wänden des Lastenfahrradbehälters Schlitze oder Öffnungen vorgesehen sein, in die die Halteelemente von oben eingeführt werden können. Eine Fixierung kann sodann beispielsweise über Schrauben, über Rastverbindungen oder dergleichen erfolgen. Bevorzugt ist es insofern, dass in montiertem Zustand insbesondere alle Halteelemente derart angeordnet sind, dass diese entweder innerhalb eines Teils des Kragenelements bzw. des Lastenfahrradbehälters angeordnet sind oder zumindest in einer Vertiefung angeordnet sind. Das Anordnen in einer Vertiefung hat den Vorteil, dass bei einem Aufprall beispielsweise der Kopf eines Kindes nicht auf das Halteelement aufschlägt, sondern auf den weichen und nachgiebigen Rand der Vertiefung. Durch das Anordnen des Halteelements in Vertiefungen ist das Halteelement gut zugänglich, sodass beispielsweise ein Verspannen des Halteelements über Schrauben auf einfache Weise möglich ist. Zusätzlich ist es möglich, die in Vertiefungen angeordneten Halteelemente nach der Montage mit Kappen oder Deckeln zu verschließen, um die Verletzungsgefahr weiter zu reduzieren.

Das Vorsehen einfach zugänglicher Halteelemente hat ferner den Vorteil, dass es hierdurch auf einfache Weise möglich ist, das Kragenelement mit dem Lastenfahrradbehälter zu verbinden, bzw. von diesem wieder zu lösen. Hierdurch ist es möglich, den Lastenfahrradbehälter auf einfache Weise je nach Anforderung, z. B. zum Transport von Kindern oder zum Transport von anderen Gütern umzubauen.

Die Vertiefungen sind vorzugsweise derart angeordnet, dass sie, ausgehend von einer Oberseite eines Teils des Kragenelements, eine Vertiefung nach Innen ausbilden. Auch kann die Vertiefung durch einen den entsprechenden Bereich umgebende Wulst ausgebildet sein. Insofern stellt die Oberfläche selbst ohne Wulst keine Vertiefung dar, sondern die Vertiefung wird erst durch das Vorsehen der den Bereich, in dem das Halteelement angeordnet ist, umgebenden Wulst ausgebildet. Auch kann eine in der Oberfläche vorhandene Vertiefung zusätzlich durch eine Wulst ausgebildet sein, so dass hierdurch die Tiefe der Vertiefung vergrößert ist.

Zum Verbinden der Halteelemente mit den entsprechenden Teilen des Kragenelements sind bevorzugt Fixierelemente vorgesehen. Hierbei handelt es sich insbesondere um Fixierplatten. Hierdurch kann ein sicheres Halten und Verbinden der Halteelemente mit dem Kragenelement realisiert werden. Beispielsweise können die Halteelemente über Schrauben oder dergleichen mit den Fixierelementen verbunden sein, so dass eine zuverlässige Verbindung gewährleistet ist. Vorzugsweise sind auch die Fixierelemente in Vertiefungen angeordnet. Diese können wiederum von einem Wulst ausgebildet und/oder von einem Wulst umgeben sein.

Bei einer bevorzugten Weiterbildung des erfindungsgemäßen Kragenelements sind Versteifungselemente vorgesehen. Derartige Versteifungselemente, die insbesondere aus einem harten Kunststoffmaterial, glasfaserverstärktem Material, Metall oder dergleichen hergestellt sind, sind vorzugsweise innerhalb des Kragenelements angeordnet. Auch können die Versteifungselemente wiederum in einer Vertiefung angeordnet sein, die vorzugsweise von einer Wulst ausgebildet und/oder von einer Wulst umgeben ist. Besonders bevorzugt ist das Vorsehen von Versteifungselementen im Übergangsbereich zwischen den Seitenelementen und dem Rückwandelement. Hierdurch können insbesondere Eckbereiche versteift werden. Insbesondere bei einem Aufprall ist hierdurch vermieden, dass das Kragenelement bricht und hierdurch zu Verletzungen führen kann.

Vorzugsweise sind die Versteifungselemente mit zumindest einem oder auch mehreren Halteelementen verbunden, sodass diese eine Einheit bilden. Hierdurch kann die Steifigkeit des Kragenelements auf einfache Weise verbessert werden. Die Versteifungselemente können hierbei einstückig mit einem oder mehreren Halteelementen ausgebildet oder mit diesen verbunden sein.

Bei einer weiteren besonders bevorzugten Ausführungsform der Erfindung weist das Rückenwandelement und/oder die Seitenelemente des Kragenelements Bereiche unterschiedlicher Härte auf. Hierdurch können besondere Bereiche ausgebildet werden, die beispielsweise eine geringere Härte aufweisen. Insbesondere handelt es sich hierbei um Bereiche, in denen ein Aufprall des Kopfes eines Kindes besonders wahrscheinlich ist. Das Kragenelement mit Bereichen unterschiedlicher Härte stellt eine selbständige Erfindung dar, die unabhängig vom Vorsehen und von der Ausgestaltung der Halteelemente ist. Bevorzugt ist es jedoch, dass die beiden Erfindungen miteinander kombiniert werden.

Insbesondere weist das Kragenelement Aufprallbereiche am Rückwandelement und/oder an dem Seitenelement auf, die weicher ausgebildet sind. Ebenso ist es möglich, dass die Aufprallbereiche eine weicher ausgebildet sind als die übrigen Bereiche des Kragenelements und somit eine höhere Deformierbarkeit aufweisen. Aufprallbereiche sind hierbei insbesondere Bereiche auf Höhe der Schläfe des Kindes im Bereich der Seitenelemente und auf Höhe des Hinterkopfes am Rückelement. Sofern eine Kopfstütze vorgesehen ist, können Aufprallbereiche am Rückenelement entfallen. Ebenso ist es möglich insbesondere beim Vorsehen von Aufprallbereiche am Rückelement einen Sitz ohne Kopfstütze zu verwenden. Ebenso ist es möglich, dass die Aufprallbereiche aus einem anderen Material oder aus demselben Material wie das übrige Kragenelement ausgebildet sind, jedoch eine geringere Dichte ausweisen.

Im Vergleich zu den übrigen Bereichen, ist es besonders bevorzugt, dass die Aufprallbereiche eine Härte aufweisen, die gegenüber dem übrigen Material um 20% bis 60% geringer ist. Beispielsweise liegt die Schaumdicht für den Lastenbehälter und vorzugsweise auch für das Kragenelement im Bereich von 50 - 70 g/l, insbesondere 55 - 65 g/l. Im Aufprallbereich ist die Schaumdichte vorzugsweise geringer und liegt vorzugsweise im Bereich von 20 - 50 g/l, insbesondere 25 - 45 g/l.

Bei einer weiteren bevorzugten Ausführungsform des erfindungsgemäßen Kragenelements ist ein Mittelsteg vorgesehen. Der Mittelsteg ist vorzugsweise mit dem Rückwandelement verbunden und weist in dieselbe Richtung wie die Seitenelemente. Der Mittelsteg ist zwischen den beiden Seitenelementen angeordnet. Das Vorsehen eines Mittelstegs stellt eine selbständige Erfindung des Kragenelements dar und ist insbesondere unabhängig vom Vorsehen und der Ausgestaltung von Halteelementen sowie vom Vorsehen von Bereichen mit geringerer Härte, d.h. insbesondere Aufprallbereichen. Besonders bevorzugt ist es jedoch, dass die den Mittelsteg betreffende Erfindung mit einer oder insbesondere beiden anderen Erfindungen kombiniert wird.

Der Mittelsteg kann einstückig mit dem Rückwandelement ausgebildet oder mit diesem verbindbar sein. Eine Verbindbarkeit hat insbesondere den Vorteil, dass der Mittelsteg auf einfache Weise entfernt werden kann. Durch den Mittelsteg ist es insbesondere möglich zwei Kinder in dem Lastenfahrradbehälter nebeneinander sitzend zu transportieren, wobei durch den Mittelsteg verhindert ist, dass die Köpfe der beiden Kinder bei einem Aufprall gegeneinanderschlagen. Durch das Vorsehen eines Mittelstegs ist das Verletzungsrisiko deutlich reduziert. Die Höhe des Mittelstegs entspricht vorzugsweise im Wesentlichen der Höhe der Seitenelemente. Sowohl der Mittelsteg als auch die Seitenelemente können insbesondere in Fahrtrichtung bzw. wegweisend vom Rückwandelement fallend ausgebildet sein. Der Mittelsteg verhindert auch, dass bei Querbeschleunigungen nach innen eine Überdehnung der Halswirbelsäule des Kinderkopfs auftritt. Vorzugsweise sind am Mittelsteg im Bereich eines möglichen Aufpralls ebenfalls Aufprallelemente vorgesehen.

Vorzugsweise weist der Mittelsteg insbesondere auf Höhe der Schläfe der transportierten Kinder einen Aufprallbereich aus weicherem Material auf. Der Mittelsteg hat insbesondere die gleiche Höhe wir der äußere Rand des Kragens.

Der Lastenfahrradbehälter kann auf unterschiedliche Weise mit Fahrrad verbunden sein. Insbesondere ist eine steife Verbindung mit dem Fahrradrahmen beispielsweise vor oder hinter dem Bereich, in dem der Benutzer sitzt, möglich. Auch kann der Lastenfahrradbehälter als Anhänger ausgebildet sein, wobei der Lastenfahrradbehälter sodann mit einem entsprechenden Chassis oder dergleichen verbunden ist.

Nachfolgend wird die Erfindung anhand einer bevorzugten Ausführungsform unter Bezugnahme auf die anliegenden Zeichnungen näher erläutert.

Es zeigen:
- Figur 1: eine schematische perspektivische Ansicht eines Lastenfahrrads mit einem Lastenaufnahmebehälter, an dem ein Kragenelement angeordnet ist,
- Figur 2: eine schematische perspektivische Ansicht einer erfindungsgemäßen Ausführungsform des Kragenelements,
- Figur 3: ein Teilbereich eines Seitenelements, das zur Verdeutlichung des Halteelements teilweise geschnitten dargestellt ist,
- Figuren 4a und 4b: perspektivische Ansichten der beiden mit den Seitenelementen verbundenen Halteelemente,
- Figur 5: eine perspektivische Ansicht des mit dem Rückwandelement verbunden Halteelements und
- Figur 6: eine schematische perspektivische Ansicht eines Kragenelements mit Mittelsteg.

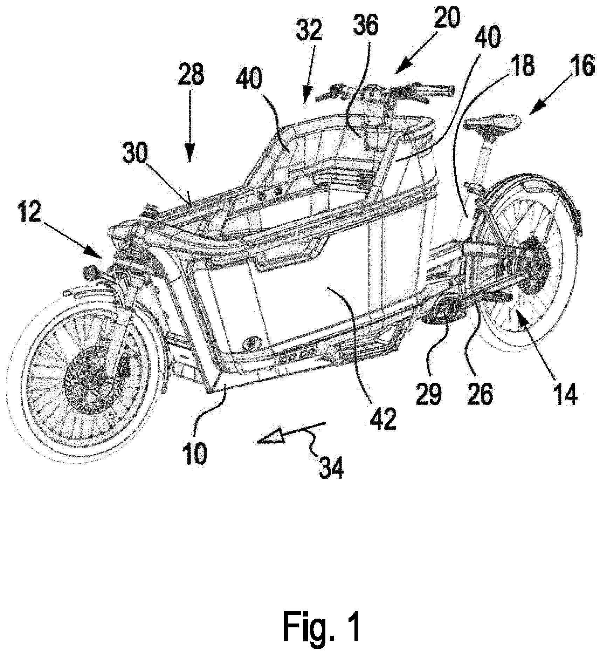

Bei dem in Figur 1 dargestellten Lastenfahrrad, handelt es sich um ein einspuriges Lastenfahrrad, bei dem ein Fahrradrahmen 10 mit einer Gabel 12 sowie einem Hinterbau 14 verbunden ist. Nahe des Hinterbaus 14 weist der Fahrradrahmen einen Sattel 16 tragende Sattelstütze 18 auf. In dem Bereich zwischen dem Hinterbau und einer einen Lenker 20 tragenden Lenksäule 22 ist ein Elektromotor 24 sowie eine Tretkurbel 26 aufweisender Antriebsbereich angeordnet. Die Lenkung der Vorderradgabel 12 erfolgt über einen Seilzug.

Der Fahrradrahmen 10 trägt einen Lastenfahrradbehälter 28, der bei dem dargestellten Lastenfahrrad zwischen der Lenksäule 22 und einem Rahmenelement, das die Gabel 12 trägt angeordnet ist.

Der Lastenfahrradbehälter 28 ist insbesondere zweiteilig aufgebaut und aus einem Kunststoffmaterial wie EPP hergestellt. Vorzugsweise ist der Lastenfahrradbehälter 28, wie in EP 20190927 beschrieben, ausgestaltet.

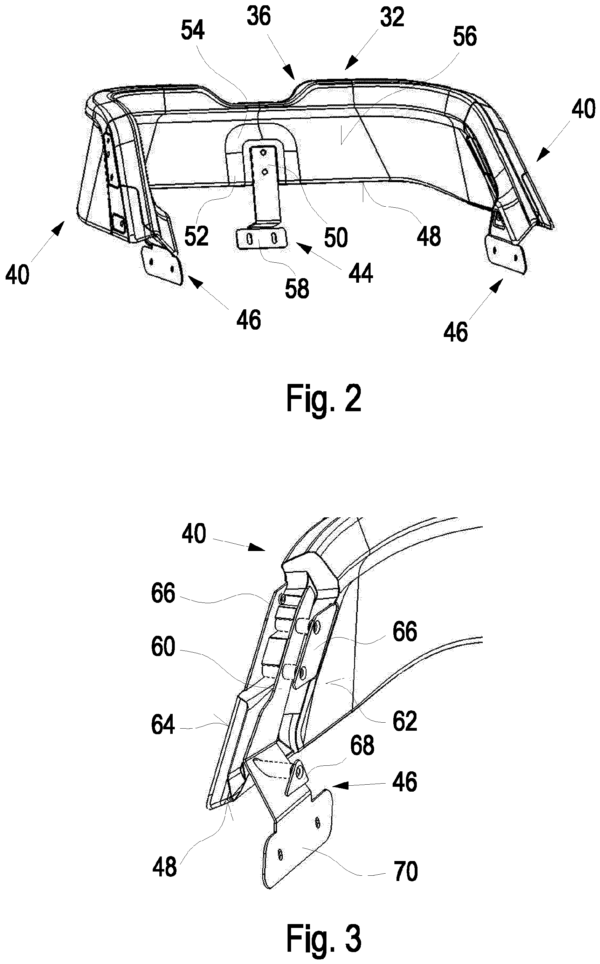

Auf einem oberen Rand 30 des Lastenfahrradbehälters 28 ist ein Kragenelement 32 angeordnet. Das Kragenelement 32 ist bezogen auf eine Fahrtrichtung 34 in einem rückwärtigen Bereich des Lastenfahrradbehälters 28 angeordnet. Das Kragenelement 32 weist eine Rückwandelement 36 auf, die in montiertem Zustand oberhalb einer Rückwandelement 38 (Figur 3) des Lastenfahrradbehälters 28 angeordnet ist und diese nach oben verlängert.

Ferner weist das Kragenelement 32 zwei Seitenelemente 40 auf, die insbesondere einstückig mit der Rückwandelement 36 verbunden sind. Die beiden Seitenelemente 40 sind jeweils oberhalb der Seitenwände 42 des Lastenfahrradbehälters 28 angeordnet und verlängern diese nach oben.

Das in Draufsicht U-förmige Kragenelement 32 dient somit als Schutz für ein innerhalb des Lastenfahrradbehälters 28 sitzendes Kind. Insbesondere schützt das Kragenelement 32 den Kopf des Kindes.

Der Lenker 20 ist bei der dargestellten bevorzugten Ausführungsform des Lastenfahrrads oberhalb des Kragenelements 32 angeordnet.

Das in Figur 2 dargestellte Kragenelement 32 ist derart ausgebildet, dass das Rückwandelement 36 sowie die beiden Seitenelemente 40 einstückig ausgebildet sind. Insbesondere handelt es sich hierbei um ein aus EPP hergestelltes Kragenelement. Das dargestellte Kragenelement weist drei Halteelemente 44, 46 auf, wobei die beiden Haltelemente 46 mit den Seitenelementen 40 und das Halteelement 44 mit dem Rückwandelement 36 verbunden ist. Der Bereich der Haltelemente 44, 46 der am Kragenelement 32 angeordnet ist, d.h. nicht über eine Unterkante 48 des Kragenelements vorsteht, ist entweder innerhalb des entsprechenden Elements des Kragenelements 32 angeordnet oder in einer Vertiefung angeordnet. Insofern ist beispielsweise ein oberes Ende 50 des Halteelements 44 in einer Vertiefung 52 des Rückwandelements 36 angeordnet. Die Vertiefung 52 ist im dargestellten Ausführungsbeispiel durch eine die Vertiefung umgebende Wulst 54 ausgebildet. Die Vertiefung 52 selbst kann in derselben Ebene wie eine Innenseite 56 des Rückwandelements 36 angeordnet sein. Ein unteres Ende 58 des Halteelements 44 ist im dargestellten Ausführungsbeispiel mit einer Rückwand des Lastenfahrradbehälters 28 verbunden. Hierbei kann die Verbindung insbesondere mit einem umlaufenden, beispielsweise rohrförmigen Rahmenelement des Lastenfahrradbehälters erfolgen.

Die beiden mit den Seitenelementen 40 verbundenen Halteelemente 46 sind entsprechend ausgebildet und insbesondere innerhalb der Seitenwände 40 oder entsprechenden Vertiefungen angeordnet.

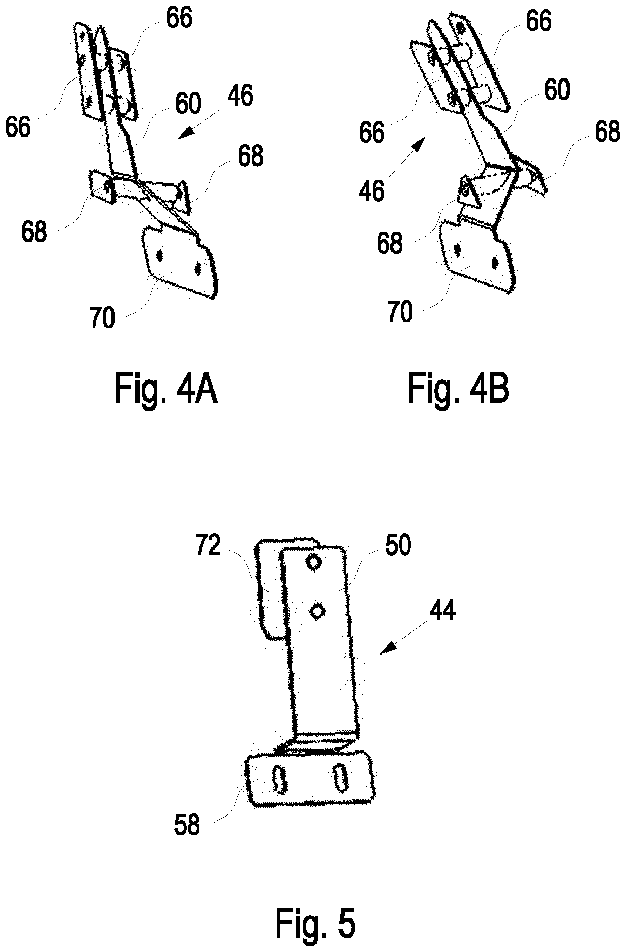

In Figur 3 ist eines der beiden Halteelemente 46 derart dargestellt, dass ein Teil des Seitenelements 40 geschnitten ist. Hierdurch ist der Aufbau des Halteelements 46 sichtbar. Im dargestellten Ausführungsbeispiel weist das Halteelement 46 einen Haltearm 60 auf, der innerhalb des Seitenelements 40 angeordnet ist. Zur Fixierung sind an einer Innenseite 62 sowie an einer Außenseite 64 des Seitenelements 40 jeweils ein als Fixierplatte ausgebildetes Fixierelement 66 vorgesehen. Die beiden Fixierelemente 66 sind in Vertiefungen angeordnet und stehen somit nicht über die Innenseite 62 bzw. die Außenseite 64 des Seitenelements 40 vor. Insbesondere sind die Vertiefungen von einer Wulst umgeben. Im Bereich des unteren Randes 48 des Seitenelements 40 ist ein weiteres Fixierelement 68 angeordnet. Dies ist ebenfalls plattenförmig ausgebildet und mit dem Halteelement 46 verbunden. Neben auf der Innenseite angeordneten Fixierelementen 68 ist wiederum ein weiteres plattenförmiges Fixierelement 68 an der Außenseite gegenüberliegend angeordnet (Figuren 4a und 4b). Die Verbindung zwischen den Fixierelementen 66, 68 und dem Halteelement 46 erfolgt vorzugsweise über Schrauben.

Des Weiteren weist das Halteelement 46 einen dem plattenförmigen Ansatz 58 (Figur 2) entsprechenden Ansatz 70 auf. Dieser dient zum Befestigen des Halteelements 46 am Lastenfahrradbehälter, insbesondere einem versteifenden Rohrelement des Lastenfahrradbehälters.

Die mit den beiden Seitenwänden 40 verbundenen Halteelemente 46 sind gesondert in den Figuren 4a und 4b perspektivisch dargestellt. Die beiden Halteelemente 46 sind hierbei spiegelbildlich zueinander ausgestaltet.

Das mit dem Rückwandelement 36 verbundene Halteelement 44 ist gesondert in Figur 5 dargestellt. Hier ist ersichtlich, dass mit dem oberen Element 50 des Halteelements 44 ebenfalls ein Fixierelement 72 verbunden ist, wobei das Fixierelement 52 ebenfalls plattenförmig ausgebildet ist. Die Verbindung erfolgt wiederum vorzugsweise über Schrauben.

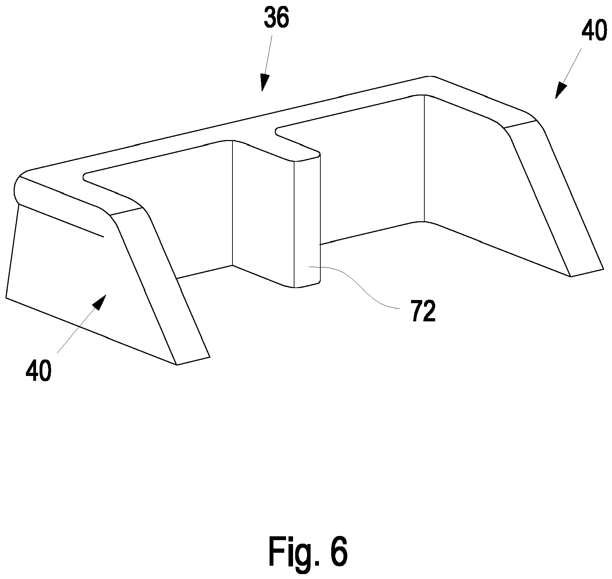

Bei einer alternativen Ausführungsform (Figur 6) ist das Rückwandelement 36 mit einem Mittelsteg 72 verbunden, wobei im dargestellten Ausführungsbeispiel eine einstückige Ausgestaltung dargestellt ist. Durch Vorsehen eines Mittelstegs 72 werden Fächer bzw. Räume gestaltet, in denen jeweils ein Kinderkopf angeordnet sein kann und sichergestellt ist, dass die beiden Köpfe auch im Falle eines Unfalls nicht gegeneinanderprallen.

## Patentansprüche

1. Kragenelement zur Anordnung an einem Lastenfahrradbehälter, mit einem Rückwandelement (36),
zwei mit dem Rückwandelement (36) verbundenen, einander gegenüberliegenden Seitenelementen (40) und
mit dem Rückwandelement (36) und/oder den Seitenelementen (40) verbundenen Halteelementen (44, 46) zum Fixieren des Kragenelements an dem Lastenfahrradbehälter (28),
**dadurch gekennzeichnet,**
**dass** die Halteelemente (44, 46) in Vertiefungen (54) angeordnet und/oder vollständig von dem Rückwandelement (36) bzw. dem Seitenelement (40) umgeben sind.

2. Kragenelement nach Anspruch 1, **dadurch gekennzeichnet, dass** die Halteelemente (44, 46) im Bereich des Rückwandelements (36) und/oder des Seitenelements (40) von einer Wulst (54) umgeben sind.

3. Kragenelement nach Anspruch 1 oder 2, **dadurch gekennzeichnet, dass** zum Verbinden der Halteelemente (44, 46) mit dem Rückwandelement (36) und/oder dem Seitenelement (40) Fixierelemente (66, 68, 72), insbesondere Fixierplatten vorgesehen sind.

4. Kragenelement nach Anspruch 3, **dadurch gekennzeichnet, dass** die Fixierelemente (66, 68, 72) in Vertiefungen angeordnet sind, die vorzugsweise von einer Wulst umgeben sind.

5. Kragenelement nach einem der Ansprüche 1 bis 4, **gekennzeichnet durch** in und/oder an dem Rückwandelement (36) und/oder dem Seitenelement (40) angeordnete Versteifungselemente.

6. Kragenelement nach Anspruch 5, **dadurch gekennzeichnet, dass** die Versteifungselemente insbesondere im Übergangsbereich zwischen den Seitenelementen (40) und dem Rückwandelement (36) angeordnet sind.

7. Kragenelement nach Anspruch 5 oder 6, **dadurch gekennzeichnet, dass** die Versteifungselemente innerhalb des Rückwandelements (36) und/oder der Seitenelemente (40) oder in Vertiefungen angeordnet sind, die vorzugsweise von einer Wulst umgeben sind.

8. Kragenelement nach einem der Ansprüche 5 bis 7, **dadurch gekennzeichnet, dass** die Versteifungselemente zumindest teilweise mit zumindest einem Halteelement (44, 46) verbunden, insbesondere einstückig ausgebildet sind.

9. Kragenelement nach einem der Ansprüche 1 bis 8, **dadurch gekennzeichnet, dass** das Rückwandelement (36) und/oder die Seitenelemente (40) Bereiche unterschiedlicher Härte aufweisen.

10. Kragenelement nach Anspruch 9, **dadurch gekennzeichnet, dass** Aufprallelemente am Rückwandelement (36) und/oder an den Seitenelementen (40) vorgesehen sind, die weicher ausgebildet sind und/oder eine höhere Deformierbarkeit aufweisen.

11. Kragenelement nach Anspruch 10, **dadurch gekennzeichnet, dass** die Aufprallbereiche aus anderem Material oder aus demselben Material mit geringerer Dichte wie das übrige Kragenelement ausgebildet sind.

12. Kragenelement nach einem der Ansprüche 1 bis 11, **dadurch gekennzeichnet, dass** mit dem Rückwandelement (36) ein Mittelsteg (72) verbunden ist, der zwischen den beiden Seitenelementen (40) angeordnet ist.
